# EUROPEAN PATENT SPECIFICATION

(11) **EP 0 407 963 B1**
(45) Date of publication and mention of the grant of the patent: **30.11.1994**
(21) Application number: 90113149.0
(22) Date of filing: 10.07.1990
(51) Int. Cl.: B60R 1/04

(54) **Inside rear view mirror for a vehicle**
Kraftfahrzeuginnenrückblickspiegel
Rétroviseur intérieur pour véhicule

(30) Priority: 14.07.1989 JP 82152/89
(43) Date of publication of application: 16.01.1991
(73) Proprietor: MURAKAMI KAIMEIDO CO., LTD, Shizuoka-Ken, 422 (JP)
(72) Inventor: Sugimura, Naomi, Shimada-shi, Shizuoka-ken 427 (JP)
(74) Representative: Riederer Freiherr von Paar zu Schönau, Anton

(56) References cited:
- DE-A- 3 515 116
- DE-C- 944 596
- FR-A- 1 560 513
- FR-A- 2 001 550
- PATENT ABSTRACTS OF JAPAN vol. 9, no. 18 (M-353)(1741) 25 January 1985; & JP-A-59 164243 (Toukai Rika Denki Seisakusho K.K.) 17 September 1984

## Description

This invention relates to an inside rear view mirror for a vehicle as stated in the prior art portion of claim 1. It is desired that such rear view mirror is capable of dropping out when an outer force in excess of a preset force is applied.

Various types of rear view mirrors mounted at an interior surface of a vehicle are known. As recently disclosed in Japanese Utility Model Application Laid Opened Publication No. 1-176551, the inside rear view mirror has a stay which is attached to a base secured to the interior surface of the vehicle, by interposing a base stay and an attaching mechanism comprising a disc spring and a set screw which is contained between the base stay and the stay. This mirror is so composed as to be attached by preliminarily securing the base to an interior surface of a front glass, a front periphery of an interior ceiling of the vehicle or the like, while the base stay is mounted on an upper surface of the stay by the set screw interposed with a disc spring, and an engaging pawl of a rear end of the base stay is inserted and engaged to a fastening taper recess provided on the base.

For the inside rear view mirror having the above described attaching mechanism, the setting of a position to where the mirror is mounted is so restricted that a dropping out torque should cause the disc spring portion to center around a pivot when the pivot of the edge of the stay is applied with the outer force facing upwardly in the direction of an angle of 45 degrees is applied from the bottom side. There are some cases that the setting of a position according to the above described restriction interferes with the driver's safe driving since a portion of the driver's forward sight is interrupted by the inside rear view mirror.

DE-C-944 596, according to the preamble of claim 1, discloses a rear view mirror means for motor vehicles in which a foot of an arm is removably mounted in a cavity of a support plate through an elastically engaging means. In this rear view mirror means the force used to engage the stay of the mirror with the base is the limit force to disengage them from each other. It is not possible to increase the required force used to disengage the mirror with respect to the force used to engage it.

An object of the invention is to provide an inside rear view mirror with less restriction for mounting the mirror. Preferably, the inside rear view mirror should be capable of being set on the place where the sight of the driver is not directly interrupted, and capable of dropping out when the edge of the stay is applied with an upwardly facing impact loading of a predetermined value.

In an inside rear view mirror according to this invention, said elastic engaging means comprises an arch shape leaf spring arranged in the frame for first being pressed together but being releasable for broading outwardly; said semi-spherical convex projections of the stoppers are elastically contacted by the respective both ends of the leaf spring and penetrate through holes in both end portions of the frame into the second indentations.

Thus, according to this invention, the inside rear view mirror is mounted by a bent leaf spring which is interposed in a frame formed between a base and an upper surface of a stay, so that it is enabled to drop out upon an impact overcoming the force of the leaf spring.

In preferred embodiments of the inside rear view mirror claimed in the invention, there is an inside rear view mirror in which the frame is integrally formed on the upper surface of the stay, or an inside rear view mirror in which the frame is separately formed from the stay and is fastened on the upper surface of the stay by a screw when the mirror is assembled. In the former case, the end portion of a screw threadedly penetrating into the cavity of the base from an obliquely lower part of the stay pushes a central portion of the leaf spring, whereby the stoppers at both sides are supported in a manner of being resiliently engaged in the second semispherical indentations on the inside wall surface of the cavity by the recovery action of the bent leaf spring. In the latter case, the end portion of the screw does not contact the leaf spring disposed in the frame since the screw which is penetrating from the lower portion of the stay is threadedly engaged with a central portion of the frame to merely uniformly fasten the frame with the stay. In any of those cases, when the stay is mounted on the base, the position is so adjusted that the semi-spherical projection on the apex or front end of the frame is contacted to the first semi-spherical indentation of the inside wall surface of the cavity and the frame on the upper portion of the stay is pushed into the cavity. Thereby the assembling of the mirror is easily finished since the leaf spring functions to allow both stoppers provided with a projecting tendency to resiliently engage the second semi-spherical indentations of the inside wall surface of the cavity.

When an impact loading in excess of a value given by the spring constant of the leaf spring is applied after the inside rear view mirror has been mounted, there is no relation of the functional direction of the outer force with reference to the direction of the screw, and the resiliently engaging means is opened to release the engagement and to permit the stay to easily drop out of the base. Therefore in this invention, there is no restriction for the position to where the mirror is mounted, as required by the conventional mirror, and the inside rear view mirror can be so mounted as to prevent it from badly affecting the driver's sight.

These and other objects, features and advantages of the present invention will become more apparent from the following description of a preferred embodiment taken in conjunction with the accompanying drawings, in which:
- Fig. 1: is a side elevational view of an embodiment of the present invention, showing the holder of an inside rear view mirror for a vehicle, partly in section, including the portion to where the stay is attached.
- Fig. 2: is a bottom view showing the holder of the inside rear view mirror from below with reference to the directions of Fig. 1.
- Fig. 3: is a perpendicular cross section taken substantially on line III - III of Fig. 1.
- Fig. 4: is a horizontal cross section shown along line IV - IV of Fig. 1, seen in a direction indicated by arrows.
- Fig. 5: is a horizontal plan view showing the condition of a leaf spring just after the stay has been engaged in the base.
- Fig. 6: is a partial perspective view of the situation of Fig. 5.
- Fig. 7: is an exploded perspective view of the inside rear view mirror holder shown in Fig. 1.
- Fig. 8: is a side elevational view similar to Fig. 1, of a modified embodiment of the present invention.
- Fig. 9: is a horizontal cross sectional bottom view taken along line IX - IX of Fig. 8, seen in a direction indicated by arrows.
- Fig. 10: is a perpendicular cross section taken along line X - X of Fig. 8, seen in a direction indicated by arrows.
- Fig. 11: is an enlarged perspective view of a frame formed separately from the stay.
- Fig. 12: is an exploded perspective view of the inside rear view mirror holder shown in Fig. 8.

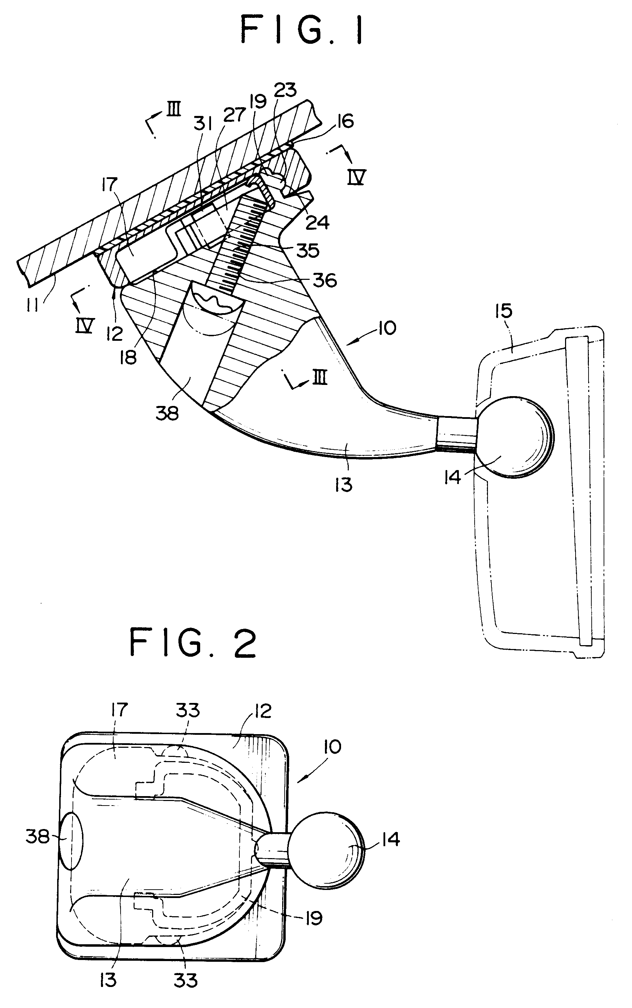

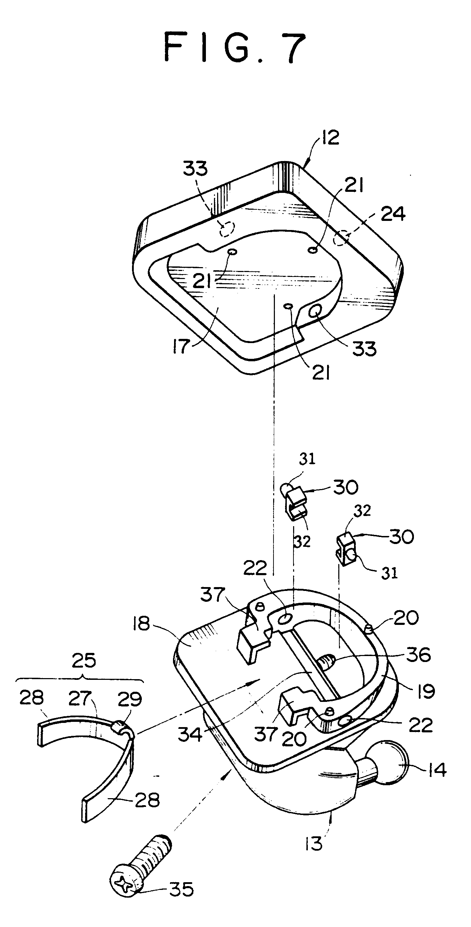

The present invention will now be described in detail with reference to the drawings. Figs. 1 to 7 illustrate the first embodiment of an assembly 10 of an inside rear view mirror. The assembly 10 has a base 12 mounted on an interior surface 11 of a vehicle, a stay 13 engaged to the base 12 and a mirror case 15 supported by an end pivot 14 of the stay 13. The interior surface 11 shown in Fig. 1 illustrates an inner surface of a front glass of the vehicle, however, a position to where the base 12 is mounted is preferably set near to the front periphery of the interior ceiling of the vehicle.

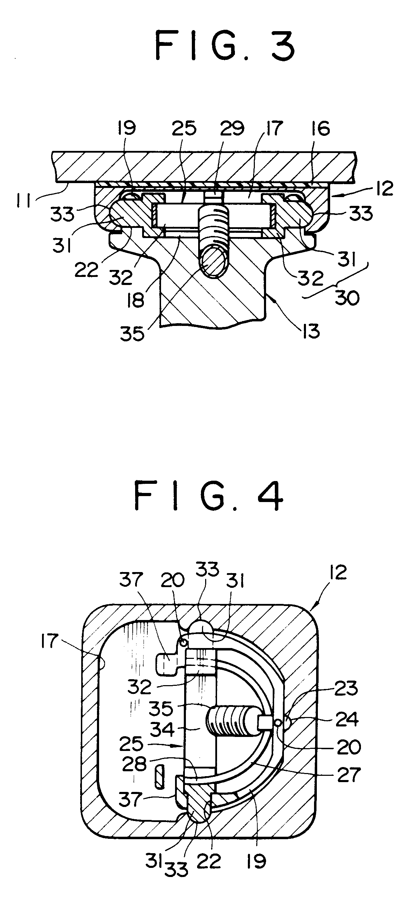

An upper surface of the base 12 is performed in a plane surface for easily mounting on the surface of the vehicle front glass or the like and is secured by an adhesion 16. The under surface of the base, as shown in Figs. 1 to 3, has a cavity 17. The cavity 17 receives an U shape frame 19 projectingly disposed on an upper surface 18 of the stay when the stay is faced to the base. Dowels 20 for determining the position to where the mirror is mounted are provided at three positions on the upper end surface of the frame 19 and hollows or small holes 21 engaged with the dowels 20 are correspondingly provided in the cavity 17 (Figs. 4 to 7).

A semi-spherical projection 23 is mounted on an end of the frame 19, and correspondingly on an inner surface of the cavity 17 a first semi-spherical indentation 24 is formed. In the frame 19, an elastic engaging means 25 capable of resiliently contacting the inside wall surface of the cavity is provided. The elastic engaging means 25 comprises an arch shape leaf spring 27 disposed in the frame 19, stoppers 30, 30 resiliently closely contacted to near both ends of the leaf spring 27, second semi-spherical indentations 33, 33 formed on the inside wall surface of the cavity 17 of the base to receive semi-spherical convex protrusions 31, 31 of the stopper 30 therein and an engaging member 35 such as a screw or a synthetic pin penetrating through a hole 36 extending from the lower part to the upper surface 18 of the stay.

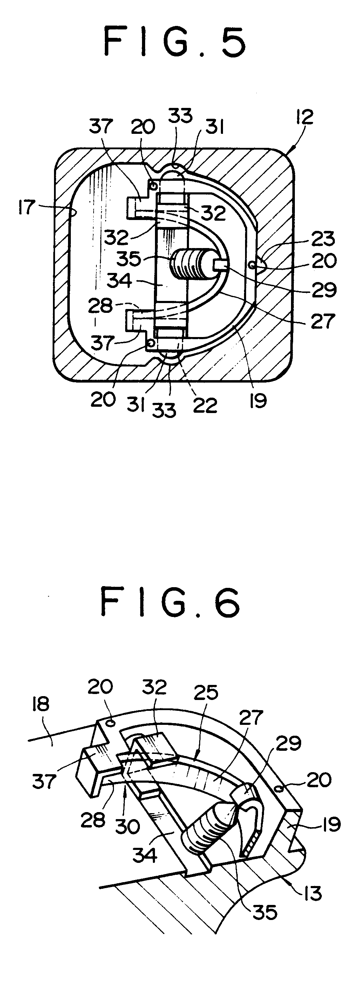

On a center of the leaf spring 27, for preventing the leaf spring from chattering to upper and lower directions, a projecting piece 29 is formed to contact the plane surface of the cavity 17 when the mirror is setted (Figs. 5 and 6). Further the stoppers 30 each comprise a hook shape basement 32 and the semi-spherical convex protrusion 31, and the hook shape basement 32 is slidably inserted into a guide groove 34 formed on the upper surface 18 of the stay. Further as shown in Fig. 4, on both ends of the frame 19, a through hole 22, 22 through which the semi-spherical convex protrusion 31, 31 of the stopper is penetrated to the base is provided and a rib 37 is also formed to provisionally fasten both ends 28, 28 of the leaf spring 27 in the frame before the stay 13 is set. In Fig. 1, numeral 38 is a large radially directed hole extending to the lower part of the stay.

In assembling the inside rear view mirror, the base 12 is adhered to the upper portion of the front glass of the vehicle or the inner surface of the front periphery of the ceiling. Further, a sub-assembled stay in which the leaf spring 27 is provisionally fastened by the portion of the rib 37 in the frame 19 on the upper surface of the stay 18 is prepared (Fig. 5). In a condition that the sub-assembled stay is provisionally fastened, as shown in Fig. 6, the end of the engaging member 35 is pushed through from the lower part of the stay to engage the center of the leaf spring 27, and both leg portions 28, 28 of the leaf spring 27 are maintained engaged with the provisionally fastening rib 37.

As above described, after the leaf spring 27 has been provisionally fastened, the semi-spherical projection 23 of the frame side is engaged in the first indentation 24 in the cavity of the stay, and simultaneously the frame 19 is engaged in the cavity 17 of the stay side while the dowel 20 on the upper surface of the frame is engaged in the hollow 21 in the respective surface of the cavity, whereby the position to where the mirror is mounted is determined. Following from the above, when the engaging member 35 is threaded into the hole 36 or pushed thereinto and the end therof is put up to the respec-tive upper direction, the bent portion of the leaf spring 27 approaches the inside wall of the frame and in accordance therewith both leg ends 28, 28 remove from the provisionally fastening ribs 37, 37. When the provisional fastening is released, since both leg ends 28, 28 broad outwardly by the resiliency of the leaf spring, the stoppers 30, 30 guided in the groove 34 move to permit the semi-spherical convex protrusions 31, 31 at the ends thereof to engage with the second indentations 33, 33 provided on the side wall of the cavity, thereby the stay is set on the frame as shown in Figs. 1, 3 and 4.

When the stay is set as above described, the stay is supported by the engagement of the semi-spherical indentation 24 in the cavity 17 with the semi-spherical projection 23 of the frame 19 and by the engagement of the second semi-spherical indentations 33, 33 of the inside wall of the cavity with the semi-spherical convex protrusions 31, 31 of the elastic engaging means 25. When the impact loading is applied to the pivot 14 at the end of the stay holding the inside rear view mirror, at least one of the semi-spherical convex protrusions 31 of the elastic engaging means 25 releases to drop the stay out.

As shown in the drawings of the invention, the screw is used as the engaging member 35, however, a synthetic pin may be used to take the place thereof. In case of using the synthetic pin, it is capable of one-push mounting and further the condition of closing the through hole provided in the lower part of the stay is also performed.

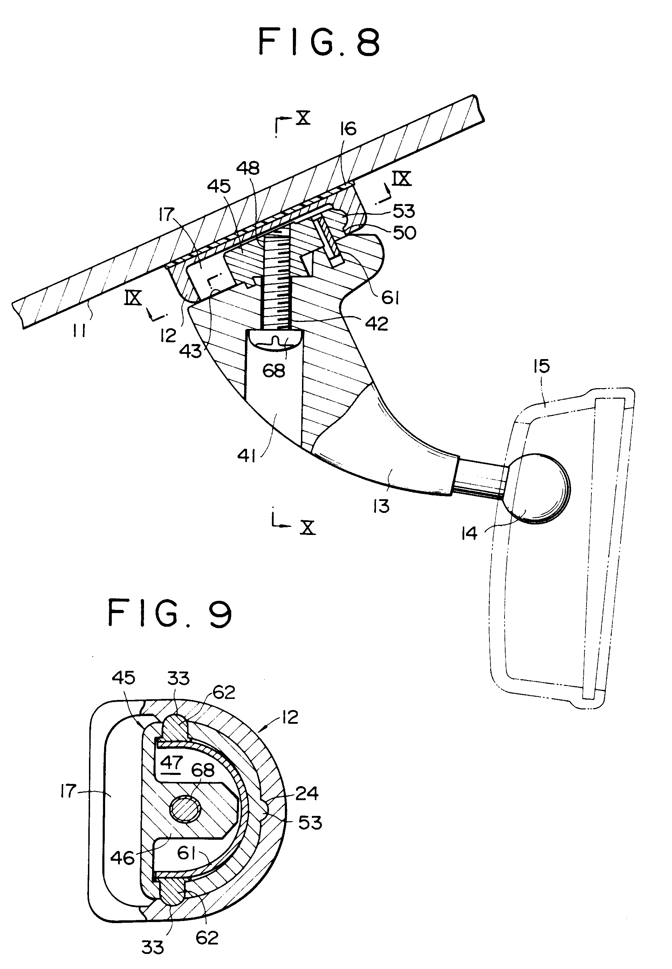

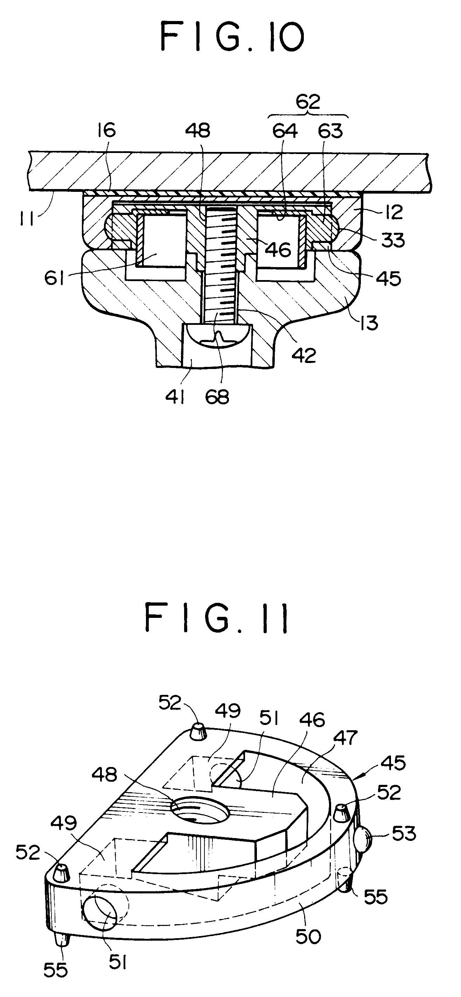

Figs. 8 to 12 show the second embodiment of this invention. In this embodiment, the stay is arranged with the separately formed frame on the upper surface thereof and is assembled to the base. The base 12 has a substantially same shape as in the first described example and is adhered to the interior surface 11. A bore consisting of a large radially directed hole 41 and a threaded hole 42 penetrates obliquely toward the schematic center of an upper surface 43 of the stay from the (in the drawing) lower part thereof.

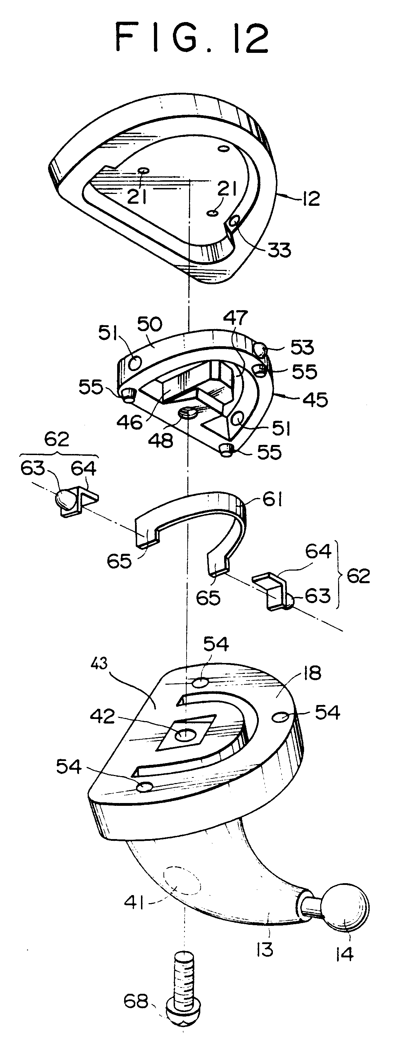

A frame 45 (Fig. 11) being made of the same material of the stay having a schematic half moon shape, at three portions of an upper end surface thereof, dowels 52 are formed for determining the position in which the mirror is to be mounted and the dowels 52 engage the holes 21 provided on the bottom side of the base 12. Further, a threaded hole 48 extends in an oblique direction through a center portion 46 of the frame while a U-shape groove 47 for receiving a leaf spring 61 of the engaging means described hereinafter is formed around the center portion 46 of the frame. And on the upper surface of both sides of the base end of this U-shape groove, a rib 49 preventing the leaf spring from dropping out is formed. On both sides of the base end of a curved outer wall 50 of the frame, a through hole 51 penetrating to the U-shape groove 47 is formed, and on an end portion, a semi-spherical projection 53 engaging the indentation 24 provided on the base 12 is formed. On the lower surface of the frame 45 (Fig. 12), a plurality of projections 55 each engaging a hollow recess 54 in the upper surface 43 of the stay for determining the position to where the mirror is mounted, is protrudingly disposed.

The elastic engaging means holds the frame 45 to the base 12. It will now be described.

The elastic engaging means comprises a leaf spring 61 disposed in the frame 45. Stoppers 62, 62 are arranged near both ends of the leaf spring 61 and semi-spherical convex protrusions 63, 63 penetrate through holes 51, 51 in the frame 45 to resiliently contact the frame 45 and the second indentations 33, 33 formed on an inside wall surface of the base. The stoppers 62, 62, contacting both sides, i. e. leg portions 65 of the leaf spring 61, are each formed by an L shape basement 64 and the semi-spherical convex protrusion 63.

To assemble the above described attaching mechanism, similarly as the first described example, the base 12 is preliminarily fixed on the interior surface 11 such as the upper portion of the front glass of the vehicle or the front periphery of the ceiling. Then the leaf spring 61 is provisionally fastened to the frame 45. That is, after the semi-spherical convex protrusions 63 providing the stoppers 62 are arranged to penetrate through the through holes 51, 51 provided on the base end portions of the curved outer wall 50 of the frame 45, the leaf spring 61 is latched to the upper end or apex portion of the U shape groove 47 of the frame 45.

As above described, the frame 45 permits the semi-spherical projection 53 provided at the apex end of the frame 45 to engage into the first indentation 24 in the cavity of the base 12 and thus to engage the cavity of the base 12, determining the position in which the mirror is to be mounted. Following to the above, both leg portions 65, 65 of the leaf spring 61 are pressed inwardly to be pushed into the U shape groove 47 of the frame 45 and then the pressing is released. When the pressing is released, by a force occuring when both leg portions 65, 65 broad outwardly by the resiliency of the leaf spring, the stoppers 62, 62 disposed outside of the leg portions move outwardly. Then the semi-spherical convex protrusions 63 disposed on the basements 64 project through the through holes 51, 51 to the outside of the frame and engage the second indentations 33 disposed in the cavity of the base 12, resulting in a sub-assembly in which the frame 45 is set in the base 12.

Then the stay 13 mounted with the mirror is arranged on the under surface of the frame 45, and after the position is so determined that the hollow recesses 54 on the upper surface 43 of the stay and the projections 55 disposed on the under surface of the frame are engaged with each other, a threaded screw 68 is penetrated from the large diameter hole 41 protruding in the oblique upward direction from the under surface of the stay and is threadedly connected to the threaded hole 48 disposed in the frame 45 to secure the stay to the frame 45.

According to the above described composition, the frame 45 and the base 12 are fixed with each other by the engagement of the first indentation 24 in the cavity 17 of the base 12 with the semi-spherical projection 53 of the frame and by the engagement of the second indentations 33, 33 disposed on the inside wall of the cavity 17 with the semi-spherical convex protrusions 63, 63 of the stoppers 62 arranged at the outside of both legs of the leaf spring 61, while the stay mounted with the mirror is threadedly secured at the under surface of the frame 45 by the screw 68. Thereby, when the mirror is mounted and the pivot 14 on the end of the stay for holding the mirror is subjected to an impact loading, at least one engagement of the second semi-spherical indentations 33, 33 and the semi-spherical convex protrusions 63, 63 which engagingly supported the frame 45 with the base 12 is released to permit the stay and the frame 45 to drop out from the base 12.

Since the embodiments of this invention are composed as above described, in case that a damage occurs at the frame portion at the time of the mirror dropping out, the exchanging of the frame is enough. Further, while in a conventional mechanism it is impossible that the stay which supports the mirror is removed from the base even by loosening the screw, it is possible in the embodiments of this invention that the stay is removed from the base by loosening the screw, and in case of the main body of the mirror being damaged, the exchanging thereof is easily possible.

According to this invention, as above described, mounting the stay to the base is simply performed without employing a special jig and it easily drops out of the base when the outer force from a relative wide extent lower direction is applied. Therefore there is no restricting condition in respect of the position where the mirror is mounted, as required in the conventional mechanism, and the mirror can be adequately located without directly having an effect on the driver's sight. And the frame is constructed to be adjusted to the base, thereby various kinds of the stay can be mounted.

## Claims

1. An inside rear view mirror for a vehicle, comprising:
a base (12) securable to an interior surface (11) of a vehicle and having a cavity (17) on an under surface thereof;
a stay (13) detachably mounted on the under surface of the base (12);
a frame (19, 45) arranged between the stay (13) and the base (12);
a first semi-spherical indentation (24) formed at an inside wall surface of the cavity (17);
a semi-spherical projection (23, 53) formed at a front end of the frame (19, 45) to engage with the first semi-spherical indentation (24);
a pair of second semi-spherical indentations (33) respectively formed on opposite positions on the inside wall surface of the cavity (17) of the base (12), the positions thereof being equally spaced from and centered around the first semi-spherical indentation (24);
stoppers (30, 62) arranged on both side portions of the frame (19, 45) and comprising semi-spherical convex projections (31, 63); and
an elastic engaging means (25, 27, 61) arranged in the frame (19, 45) to permit the stoppers (30, 62) to elastically engage into the second indentations (33, 33), characterized in that
said elastic engaging means comprises an arch shape leaf spring (27, 61) arranged in the frame (19, 45) for first being pressed together but being releasable for broading outwardly;
said semi-spherical convex projections (31, 63) of the stoppers (30, 62) are elastically contacted by the respective both ends (28, 65) of the leaf spring (27, 61) and penetrate through holes (22, 51) in both end portions of the frame (19, 45) into the second indentations (33).

2. The inside rear view mirror according to claim 1, characterized in that the frame (19) is a solid part of the stay (13).

3. The inside rear view mirror according to claim 1, characterized in that the frame (45) is an integral part of the stay (13).

4. The inside rear view mirror according to any of claims 1 to 3, characterized in that the frame (19, 45) is received in the cavity (17) of the base (12) for mounting the stay (13) at its upper surface (18, 43) to the base (12).

5. The inside rear view mirror according to any of claims 1 to 4, characterized in that an engaging member (35) penetrates from the lower part to the upper surface of the stay (13) to permit the semi-spherical convex projections (31) of the stoppers (30) to elastically engage the second indentations (33) by progressingly pushing the center of the bent portion of the leaf spring (27).

6. The inside rear view mirror according to any of claims 1, 3 to 5, characterized in that the frame (45) has a semi-circular leaf shape and is provided with a boss portion (46) on a center thereof and a U shape groove (47) on the periphery of said boss portion (46); and that a threaded hole (48) is provided at said boss portion (46) and a screw (42) is penetrated through said threaded hole (48) to mount the frame (45) in the cavity (17).

7. The inside rear view mirror according to claims 1 and 6, characterized in that an engaging member (68) penetrates from the lower part of the stay (13) to the boss portion.

8. The inside rear view mirror according to claim 6 or 7, characterized in that said frame (45) has a provisionally fastening rib (49) on both ends thereof.

9. The inside rear view mirror according to any of claims 1 to 7, characterized in that on the upper surface of the frame (19, 45) and at the inner surface of the cavity (17) formed in the base (12), several dowels (20, 52) and complementary holes (21), respectively, are formed for determining the mutual position.

10. The inside rear view mirror according to claim 9, characterized in that also at the lower surface of the frame (45) and on the upper surface (43) of the stay (13) several dowels (52) and complementary holes (21), respectively, are formed for determining the mutual position.

11. The inside rear view mirror according to any of claims 1 to 5, characterized in that said stoppers (30, 62) each comprise a hook shape basement (32, 64) and the semi-spherical convex projection (31, 63).

12. The inside rear view mirror according to claim 11 excluding its back-reference to claim 2, characterized in that the hook shape basement (32, 64) is slidably penetrated in a guide groove (34) formed on the upper surface (18) of the stay (13).

## Patentansprüche

1. Ein Kraftfahrzeug-Innenrückblickspiegel, umfassend:
eine an einer Innenfläche (11) eines Fahrzeugs befestigbare und einen Hohlraum (17) an ihrer unteren Fläche aufweisende Basis (12);
eine an der unteren Fläche der Basis (12) abnehmbar montier te Stütze (13);
einen zwischen der Stütze (13) und der Basis (12) angeordneten Rahmen (19, 45);
eine an der Innenwandfläche des Hohlraums (17) ausgebildete erste halbkugelartige Einbuchtung (24);
eine an einem vorderen Ende des Rahmens (19, 45) ausgebildete halbkugelartige Erhebung (23, 53) zum Eingriff in die erste halbkugelartige Einbuchtung (24);
ein Paar von an gegenüberliegenden Positionen der Innenwandfläche des Hohlraums (17) der Basis (12) jeweils gebildeten zweiten halbkugelartigen Einbuchtungen (33), deren Positionen sich in gleichen Abständen von der ersten halbkugelartigen Einbuchtung (24) und zentriert um diese befinden; an beiden Seitenteilen des Rahmens (19, 45) angeordnete und halbkugelartige gewölbte Erhebungen (31, 63) umfassende Anschlagelemente (30, 62); und
eine im Rahmen (19, 45) angeordnete Einrasteinrichtung (25, 27, 61), durch die die Anschlagelemente (30, 62) elastisch in die zweiten Ausbuchtungen (33, 33) eingreifen können, dadurch gekennzeichnet, daß
die elastische Einrasteinrichtung eine im Rahmen (19, 45) angeordnete bogenförmige Blattfeder (27, 61) umfaßt, die zuerst zusammendrückbar jedoch dann lösbar ist, um sich nach außen zu verbreitern; und
die halbkugelartigen gewölbten Erhebungen (31, 63) der Anschlagelemente (33, 62) elastisch von den entsprechenden beiden Enden (28, 65) der Blattfeder (27, 61) kontaktiert sind und durch in beiden Endteilen des Rahmens (19,45) befindliche Löcher (22, 51) in die zweiten Einbuchtungen (33) eindringen.

2. Der Innenrückblickspiegel gemäß Anspruch 1, dadurch gekennzeichnet, daß der Rahmen (19) ein fester Bestandteil der Stütze (13) ist.

3. Der Innenrückblickspiegel gemäß Anspruch 1, dadurch gekennzeichnet, daß der Rahmen (45) ein integraler Bestandteil der Stütze (13) ist.

4. Der Innenrückblickspiegel gemäß einem der Ansprüche 1 bis 3, dadurch gekennzeichnet, daß der Rahmen (19, 45) im Hohlraum (17) der Basis (12) für die Montage der Stütze (13) mit ihrer oberen Fläche (18, 43) an der Basis (12) aufgenommen ist.

5. Der Innenrückblickspiegel gemäß einem der Ansprüche 1 bis 4, dadurch gekennzeichnet, daß ein Angreifglied (35) vom unteren Teil zur oberen Fläche der Stütze (13) durchdringt, um zu ermöglichen, daß die halbkugelartigen gewölbten Erhebungen (31) der Anschlagelemente (30) durch zunehmendes Drücken auf das Zentrum des gebogenen Teils der Blattfeder (27) elastisch in die zweiten Einbuchtungen (33) eingreifen.

6. Der Innenrückblickspiegel gemäß einem der Ansprüche 1 und 3 bis 5, dadurch gekennzeichnet, daß der Rahmen (45) eine halbkreisförmige Blattform besitzt und in seinem Zentrum mit einem Vorsprung (46) und einer U-förmigen Nut (47) an der Peripherie des Vorsprungs (46) ausgestattet ist; und daß an diesem Vorsprung (46) ein Gewindeloch (48) angeordnet ist und eine Schraube (42) durch dieses Gewindeloch (48) hindurch verläuft, um den Rahmen (45) in dem Hohlraum (17) zu montieren.

7. Der Innenrückblickspiegel gemäß den Ansprüchen 1 und 6, dadurch gekennzeichnet, daß ein Angreifglied (68) vom unteren Teil der Stütze (13) zum Vorsprung vordringt.

8. Der Innenrückblickspiegel gemäß dem Anspruch 6 oder 7, dadurch gekennzeichnet, daß der Rahmen (45) an seinen beiden Enden einen Bügel (49) zur provisorischen Befestigung besitzt.

9. Der Innenrückblickspiegel gemäß einem der Ansprüche 1 bis 7, dadurch gekennzeichnet, daß auf der oberen Fläche des Rahmens (19, 45) und an der inneren Fläche des in der Basis (12) ausgebildeten Hohlraums (17) mehrere Dübel (20, 52) bzw. komplementäre Löcher (21) zur Bestimmung der gegenseitigen Position ausgebildet sind.

10. Der Innenrückblickspiegel gemäß Anspruch 9, dadurch gekennzeichnet, daß auch an der unteren Fläche des Rahmens (45) und auf der oberen Fläche (43) der Stütze (13) mehrere Dübel (52) bzw. komplementäre Löcher (21) zur Bestimmung der gegenseitigen Position ausgebildet sind.

11. Der Innenrückblickspiegel gemäß einem der Ansprüche 1 bis 5, dadurch gekennzeichnet, daß jedes der Anschlagelemente (30, 62) einen hakenförmigen Sockel (32, 64) und die halbkugelartige gewölbte Erhebung (31, 63) umfaßt.

12. Der Innenrückblickspiegel gemäß Anspruch 11, ausschließlich seiner Rückbeziehung auf Anspruch 2, dadurch gekennzeichnet, daß der hakenförmige Sockel (32, 64) in eine auf der oberen Fläche (18) der Stütze (13) ausgebildete Führungsnut (34) hineinragt und darin verschiebbar ist.

## Revendications

1. Rétroviseur intérieur pour véhicules, comprenant :
une base (12) pouvant être fixée sur une face intérieure (11) d'un véhicule et dont la surface inférieure comporte une cavité (17) ;
un bras (13) fixé de façon amovible sur la surface inférieure de la base (12) ;
une monture (19, 45) disposée entre le bras (13) et la base (12) ;
une première gorge hémisphérique (24) formée sur une surface de paroi intérieure de la cavité (17) ;
un bossage hémisphérique (23, 53) formé à une extrémité avant de la monture (19, 45) pour venir en prise avec la première gorge hémisphérique (24) ;
une paire de secondes gorges hémisphériques (33) respectivement formées sur des positions opposées de la surface intérieure de la cavité (17) de la base (12), les positions de ces gorges étant également espacées et disposées de chaque côté de la première gorge hémisphérique (24) ;
des butées (30, 62) disposées sur les deux parties latérales de la monture (19, 45) et comportant des saillies convexes hémisphériques (31,63) ; et
des moyens élastiques de prise (25, 27, 61) disposés dans la monture (19, 45) pour permettre aux butées (30, 62) de venir en prise élastique dans les secondes gorges (33, 33), caractérisé en ce que
les dits moyens de prise élastique comportent un ressort à lame de forme cintrée (27, 61) placé dans la monture (19, 45) pour être d'abord comprimé, mais pouvant être libéré pour s'élargir vers l'extérieur ;
lesdites saillies convexes hémisphériques (31, 63) des butées (30, 62) sont contactées de manière élastique par les deux extrémités respectives (28, 65) du ressort à lame (27, 61) et pénétrent dans des orifices (22, 51) formés dans les deux parties d'extrémité de la monture (19, 45) pour pénétrer dans les secondes gorges (33).

2. Rétroviseur intérieur selon la revendication 1, caractérisé en ce que la monture (19) est une partie massive du bras (13).

3. Rétroviseur intérieur selon la revendication 1, caractérisé en ce que la monture (45) fait partie intégrante du bras (13).

4. Rétroviseur intérieur selon l'une quelconque des revendications 1 à 3, caractérisé en ce que la monture (19, 45) est reçue dans la cavité (17) de la base (12) pour monter le bras (13) par sa surface supérieure (18, 43) sur la base (12).

5. Rétroviseur intérieur selon l'une quelconque des revendications 1 à 4, caractérisé en ce qu'un élément de prise (35) pénétre depuis la partie inférieure jusqu'à la surface supérieure du bras (13) pour permettre aux saillies convexes hémisphériques (31) des butées (30) de venir en prise élastique avec les secondes gorges (33) en forçant progressivement le centre de la partie cintrée du ressort à lame (27).

6. Rétroviseur intérieur selon l'une quelconque des revendications 1, 3 à 5, caractérisé en ce que la monture (45) a la forme d'une lame semi-circulaire, et comporte un bossage (46) en son centre et une rainure en forme de U (47) sur la périphérie du bossage (46) ; en ce qu'un orifice fileté (48) est formé sur le bossage (46) et en ce qu'une vis (42) pénètre dans le dit orifice fileté (48) pour monter la monture (45) dans la cavité (17).

7. Rétroviseur intérieur selon les revendications 1 et 6, caractérisé en ce qu'un élément de prise (68) pénètre depuis la partie inférieure du bras (13) jusqu'au bossage.

8. Rétroviseur intérieur selon la revendication 6 ou 7, caractérisé en ce que ladite monture (45) présente à ses deux extrémités une nervure (49) de fixation provisoire.

9. Rétroviseur intérieur selon l'une quelconque des revendications 1 à 7, caractérisé en ce que, sur la surface supérieure de la monture (19, 45) et sur la surface intérieure de la cavité (17) formée dans la base (12), sont formés plusieurs douilles (20, 52) et orifices complémentaires (21), respectivement pour définir la position mutuelle entre les deux pièces.

10. Rétroviseur intérieur selon la revendication 9, caractérisé en ce qu'également sur la surface inférieure de la monture (45) et sur la surface supérieure (43) du bras (13) sont formés plusieurs douilles (52) et orifices complémentaires (21), respectivement pour définir la position mutuelle entre les deux pièces.

11. Rétrovisuer intérieur selon l'une quelconque des revendications 1 à 5, caractérisé en ce que lesdites butées (30, 62) comportent chacune un socle en forme de crochet (32, 64) et la saillie convexe hémisphérique (31, 63).

12. Rétroviseur intérieur selon la revendication 11, ne comportant pas sa référence à la revendication 2, caractérisé en ce que le socle en forme de crochet (32, 64) coulisse dans une rainure de guidage (34) formée sur la surface supérieure (18) du bras (13).
